# EUROPEAN PATENT APPLICATION

(11) **EP 4 818 218 A1**
(43) Date of publication of application: **07.10.2026**
(21) Application number: 25167494.1
(22) Date of filing: 31.03.2025
(51) Int. Cl.: C08F 210/16, C08F 4/6592

(54) **MULTISTAGE ETHYLENE POLYMERISATION PROCESSES**

(71) Applicant: Borealis GmbH, 1020 Vienna (AT)
(72) Inventor: JAYARATNE, Kumudini Chandrika, 06850 Muovintie 19, Kulloo (FI); RANIERI, Maria, 06850 Muovintie 19, Kulloo (FI); VANNE, Tiina, 06850 Muovintie 19, Kulloo (FI); VARZESHKHAH, Riitta, 06850 Muovintie 19, Kulloo (FI); HASSINEN, Jarkko, 06850 Muovintie 19, Kulloo (FI); SAIKKONEN, Esko, 06850 Muovintie 19, Kulloo (FI); KETTNER, Joana Elvira, 4021 Linz (AT); ALBRECHT, Andreas, 4021 Linz (AT); JEREMIC, Ljiljana, 4021 Linz (AT); RAUCH, Martin, 4021 Linz (AT); VASZI, Zsolt, 4021 Linz (AT); ZIMMERMANN, Christian, 4021 Linz (AT)
(74) Representative: HGF

(57) **Abstract**

A multistage ethylene polymerisation process for producing ethylene copolymers is described. The process comprises:
a) polymerising ethylene in the presence of a solid Ziegler-Natta catalyst component comprising titanium, and a co-catalyst in a first polymerisation stage to produce a first polymer component;
b) polymerising ethylene in the presence of the solid Ziegler-Natta catalyst component, the cocatalyst and the first polymer component in a second polymerisation stage to produce a second polymer component;

wherein ethylene is polymerised with an alpha-olefin comonomer having from 3 to 10 carbon atoms in the first polymerisation stage and/or the second polymerisation stage; and
wherein the first polymerisation stage and/or the second polymerisation stage takes place in the presence of an external donor selected from bi-(oxygen containing ring) compounds of formula (I): 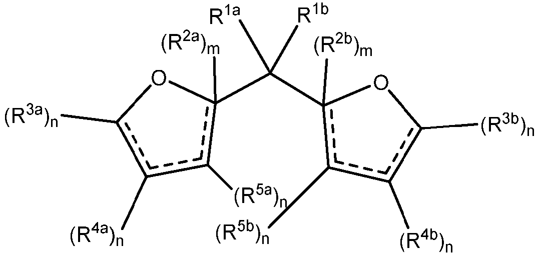 in which:
n is independently at each occurrence an integer selected from 1 and 2;
m is independently at each occurrence an integer selected from 0 and 1;
each of R^{1a}, R^{1b}, R^{2a}, R^{2b}, R^{3a}, R^{3b}, R^{4a}, R^{4b}, R^{5a} and R^{5b} is independently selected from hydrogen, linear or branched C₁ to Cs alkyl, C₃ to Cs alkylene, or wherein two or more of R^{1a}, R^{1b}, R^{2a}, R^{2b}, R^{3a}, R^{3b}, R^{4a}, R^{4b}, R^{5a} and R^{5b} can form a ring;
wherein the two oxygen-containing rings can be individually saturated, partially unsaturated or unsaturated

## Description

The present invention relates to a multistage ethylene polymerisation process for producing ethylene copolymers.

### Background of the invention

Ziegler-Natta (ZN) type catalyst systems are used for the polymerisation of olefins, for example, ethylene to produce ethylene homopolymers and copolymers. Generally, such catalyst systems comprise a solid catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC). The catalyst component may optionally comprise an internal (electron) donor. A ZN catalyst system may also comprise further additives, such as cocatalyst(s) and one or more external (electron) donors. The further additives, namely components which are not part of the solid catalyst component, can be fed as separate components during the polymerisation process.

A variety of Ziegler-Natta catalyst systems have been developed to fulfil various demands in reaction characteristics and producing resins of desired physical and mechanical performance. Typical Ziegler-Natta catalyst systems contain a solid catalyst component comprising titanium compound(s), e.g., supported on a particulate support. In addition to titanium, the catalyst component may further comprise magnesium, and optionally aluminium. Suitable particulate supports are inorganic oxide type of supports, such as silica, alumina, titania, silica-alumina and silica-titania, typically silica.

The catalyst component can be prepared by sequentially contacting the carrier with the above mentioned compounds, for example, as described in EP 688794 and WO 99/51646. Alternatively, the catalyst component can be prepared by first preparing a solution from the components and then contacting the solution with a carrier, as described in WO 01/55230.

Even though many catalyst systems may show satisfactory properties for certain applications, it is desirable to continue to improve catalyst performance to achieve improved polymer properties and/or process performance. Polymerisation responses to hydrogen and comonomer can be indicative of the way in which a catalyst performs under a given set of reaction conditions. Accordingly, catalyst flexibility with regards to possibilities for controlling molecular weight (Mw), molecular weight distribution (MWD) and comonomer content are general indicators of the catalyst performance. Shortfalls relating to these properties can be indicative of performance properties of the catalysts. Further, if high molecular weight polymers are desired, and the hydrogen amount cannot be further educed, then external additives can be used in the polymerisation to boost molecular weight. However, in this scenario, polymers may be produced at the expense of the catalyst productivity. There have been several attempts to find solutions by modifying the catalyst system.

US 5055535 describes a method for controlling the molecular weight distribution (MWD) of polyethylene homopolymers and copolymers using a ZN catalyst comprising an electron donor selected from monoethers (e.g. tetrahydrofuran). The monoethers are added to the catalytic component in the presence of the cocatalyst and is further characterised that under no circumstance should the monoethers be brought into contact with the catalytic component without the presence of the cocatalyst in the medium.

WO 2007051607 A1 suggests the possibility of tailoring the properties of a multimodal ethylene polymer by using alkyl ether type internal electron donor, preferably tetrahydrofuran, to modify ZN catalyst component to influence the molecular weight distribution (MWD) of a higher molecular weight (HMW) component.

WO2004055065 describes a solid catalyst component comprising Ti, Mg, halogen and electron donor in specific molar ratios for preparation copolymers of ethylene with α-olefins, where the α-olefins are homogeneously distributed along the polymer chains. The electron donor (ED) is preferably ether, like tetrahydrofuran. Said catalyst component is used in polymerisation together with alkylaluminium compound and optionally with external electron donor. The optional external electron donor is said to be equal to or different from the ED used in catalyst component.

EP0376936 describes a MgCl₂ supported ZN catalyst, where spray-dried MgCl₂ /alcohol carrier material is treated with a compound of group IA to IIIA (Groups 1 , 2 and 13 of the Periodic Table (IUPAC, Nomenclature of Inorganic Chemistry, 1989)) then titanated with a titanium compound, optionally in the presence of internal electron donor such as THF or diisobutyl phthalate.

WO 2014004396 A1 describes a solid ZN catalyst system, where heterocyclic organic compounds are suggested for use as internal or external donors.

EP 2746306 describes a supported Ziegler-Natta catalyst component comprising an internal electron donor selected from certain bi-(oxygen containing ring) compounds, such as 2.2-di(2-tetrahydrofuryl)propane. The catalyst of EP 2746306 is prepared by depositing a soluble alkoxy compound of Group 1 to 3 metal, a compound of Group 13 metal, an internal electron donor and a transition metal compound of Group 4 to 6 on a particulate support, or alternatively forming precipitated support material by contacting a soluble magnesium alkoxide compound, an electron donor solution and a solution of aluminium alkyl chloride compound.

WO 2016097193 describes a solid MgCl₂ supported catalyst component formed by providing solid carrier particles of a MgCl₂*mROH adduct in which R is a linear or branched alkyl group with 1 to 12 carbon atoms, and m is 0 to 6. The solid carrier particles are contacted with an internal donor, such as 2,2-di(2-tetrahydrofuryl)propane or 2,2-di-(2-furan)-propane. In comparative example 3, ethylene is co-polymerised with 1-butene in the presence of 2,2-di(2-tetrahydrofuryl)propane as an external donor, where the molar ratio of DTHFP to Ti was 0.47.

### Brief Description of the Drawings

Figures 1 and 2 show how the catalyst activity increases as the molar ratio of 2,2-di(2-tetrahydrofuryl)propane (DTHFP) to titanium decreases;
Figure 3 shows how the comonomer content of copolymer increases as the molar ratio of 2,2-di(2-tetrahydrofuryl)propane (DTHFP) to titanium decreases;
Figure 4 shows how the molecular weight of the copolymer decreases as the molar ratio of 2,2-di(2-tetrahydrofuryl)propane (DTHFP) to titanium decreases; and
Figure 5 shows the effect of 2,2-di(2-tetrahydrofuryl)propane (DTHFP) on the activity profile of the polymerisation reaction.

### Summary of the invention

According to a first aspect, there is provided a multistage ethylene polymerisation process for producing ethylene copolymers, said process comprising:
a) polymerising ethylene in the presence of a solid Ziegler-Natta catalyst component comprising titanium, and a co-catalyst in a first polymerisation stage to produce a first polymer component;
b) polymerising ethylene in the presence of the solid Ziegler-Natta catalyst component, the cocatalyst and the first polymer component in a second polymerisation stage to produce a second polymer component;
   wherein ethylene is polymerised with an alpha-olefin comonomer having from 3 to 10 carbon atoms in the first polymerisation stage and/or the second polymerisation stage; and
   wherein the first polymerisation stage and/or the second polymerisation stage takes place in the presence of an external donor selected from bi-(oxygen containing ring) compounds of formula (I): 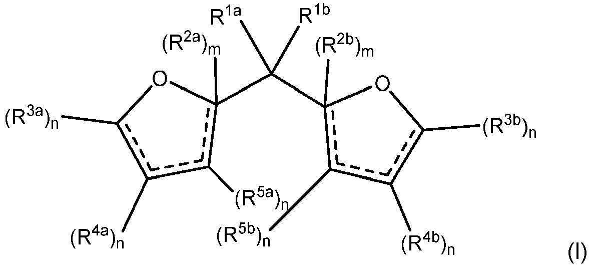
   in which:
      n is independently at each occurrence an integer selected from 1 and 2;
      m is independently at each occurrence an integer selected from 0 and 1;
      each R^{1a}, R^{1b}, R^{2a}, R^{2b}, R^{3a}, R^{3b}, R^{4a}, R^{4b}, R^{5a} and R^{5b} are the same or different and are independently selected from hydrogen, linear or branched C₁ to C₈ alkyl, C₃ to C₈ alkylene, or wherein two or more of R^{1a}, R^{1b}, R^{2a}, R^{2b}, R^{3a}, R^{3b}, R^{4a}, R^{4b}, R^{5a} and R^{5b} can form a ring;
      wherein the two oxygen-containing rings can be individually saturated, partially unsaturated or unsaturated.

The term "n", therefore, refers to the number of R^{3a}, R^{3b}, R^{4a}, R^{4b}, R^{5a} and R^{5b} substituents attached to each oxygen-containing ring, while the term "m" refers to the number of R^{2a} and R^{2b} substituents attached to each oxygen-containing ring.

For the avoidance of doubt, each of R^{2a}, R^{2b}, R^{3a}, R^{3b}, R^{4a}, R^{4b}, R^{5a} and R^{5b} may be the same or different and independently selected from hydrogen, linear or branched C₁ to C₈ alkyl, C₃ to C₈ alkylene, or wherein two or more of R^{2a}, R^{2b}, R^{3a}, R^{3b}, R^{4a}, R^{4b}, R^{5a} and R^{5b} can form a ring.

For the absence of doubt, when the carbon to which any given (R^{3a})ₙ, (R^{3b} )ₙ, (R^{4a})ₙ, (R^{4b})ₙ, (R^{5a})ₙ, and (R^{5b})ₙ is attached is sp² hybridised, n is 1, and when the carbon to which any given (R^{3a})ₙ, (R^{3b})ₙ, (R^{4a})ₙ, (R^{4b})ₙ, (R^{5a})ₙ, and (R^{5b})ₙ is attached is sp³ hybridised, n is 2.

For the absence of doubt, when the carbon to which any given (R^{2a})ₘ and (R^{2b})ₘ is attached is sp² hybridised, m is 0, and when the carbon to which any given (R^{2a})ₘ and (R^{2b})ₘ is attached is sp³ hybridised, m is 1.

It has been found that, by using a compound of the formula (I) as an external donor, polymerisation proceeds with a more stable kinetic profile. This can present advantages when longer reactor residence times are required, e.g., in a multistage polymerisation reactions, where it is desirable for the catalyst to maintain relatively stable activity levels as the catalyst is transferred sequentially to downstream reactor(s).

It has also been found that, by using a compound of the formula (I) as an external donor, the manner in which comonomer is incorporated into the polymer is improved. When ethylene is copolymerised with a comonomer, ethylene copolymer chains are produced having a distribution of molecular weights. In some prior art processes, the comonomer may have a greater tendency to be incorporated into the copolymer chains having lower molecular weights. Low molecular weight chains having high comonomer contents tend to have higher solubilities, resulting in products with higher levels of extractables. It has been found that, by using a compound of the formula (I) as an external donor, the comonomer is more evenly distributed across the copolymer chains of differing molecular weight. This improved Chemical Composition Distribution (CCD) provides a more uniform copolymer product. This can also provide a copolymer product with lower levels of extractables.

Furthermore, it has been found that, by using a compound of the formula (I) as an external donor, desirable comonomer responses can be achieved. A catalyst system that is responsive to comonomer can produce a copolymer having a higher comonomer content for a given comonomer concentration in the feed. Conversely, a catalyst system that is less responsive to comonomer tends to produce a copolymer having a lower comonomer content for a given comonomer concentration in the feed. It has been found that the comonomer response of the ZN catalyst system can be varied by tailoring the molar ratio of the external donor of the formula (I) to titanium. For example, by decreasing this molar ratio, the comonomer response can be improved, such that higher levels of comonomer incorporation can be achieved for a given comonomer feed concentration. Furthermore, by decreasing the molar ratio of external donor to titanium, it is also possible to increase the activity of the polymerisation reaction. Accordingly, by tailoring the molar ratio, it is possible to tailor the activity of the polymerisation reaction and comonomer response. Moreover, because the compound of the formula (I) is provided as an external donor, it is possible to control and/or vary the molar ratio of the compound of the formula (I) to titanium more conveniently and/or accurately. When the compound of formula (I) is used as an internal donor, the molar ratio of the compound of the formula (I) to titanium is determined by the manner in which the catalyst is manufactured. By using the compound of the formula (I) as an external donor, the molar ratio of the compound of formula (I) to titanium can be varied as desired after the catalyst component has been manufactured. This provides flexibility in the manner in which a given catalyst component can be used.

Advantageously, using compound of the formula (I) as an external donor may also provide a more even short chain branching (SCB) profile across the molecular weight distribution of the final polymer. This can result in desirable characteristics and/or enhanced mechanical properties. Examples of such desirable characteristics include a more even distribution of the comonomer. This can have a positive effect on tensile strength, impact resistance, stress crack resistance, and optical properties such as film transparency. In addition, a more even distribution of comonomer can result in a better processability of the polymer.

The first polymerisation stage may take place in the presence of the external donor and wherein the molar ratio of the external donor to titanium of the catalyst component is 1 or less, preferably 0.8 or less, more preferably 0.6 or less, even more preferably 0.5 or less. In a preferred embodiment, the molar ratio of the external donor to titanium may be less than 0.47, preferably 0.46 or less, more preferably 0.45 or less. In a preferred embodiment, the molar ratio may be 0.44 or less. In a more preferred embodiment, the molar ratio may be from 0.01 to 0.46, more preferably from 0.02 to 0.45, yet more preferably from 0.03 to 0.44. In some cases, the molar ratio of the external donor (compound (I)) to titanium is not 0.47 in the first polymerisation stage. In some cases, the molar ratio of 2,2-di(2-tetrahydrofuryl)propane (DTHFP) to titanium is not 0.47 in the first polymerisation stage.

The second polymerisation stage may take place in the presence of the external donor and wherein the molar ratio of the external donor to titanium of the catalyst component is 1 or less, preferably 0.8 or less, more preferably 0.6 or less, even more preferably 0.5 or less. In a preferred embodiment, the molar ratio of the external donor to titanium may be less than 0.47, preferably 0.46 or less, more preferably 0.45 or less. In a preferred embodiment, the molar ratio may be from 0.44 or less. In a more preferred embodiment, the molar ratio may be from 0.01 to 0.46, more preferably from 0.02 to 0.45, yet more preferably from 0.03 to 0.44. In some cases, the molar ratio of the external donor (compound (I)) to titanium is not 0.47 in the second polymerisation stage. In some cases, the molar ratio of 2,2-di(2-tetrahydrofuryl)propane (DTHFP) to titanium is not 0.47 in the second polymerisation stage.

The external donor may be present in the first polymerisation stage and/or in the second polymerisation stage. In a preferred embodiment, the external donor may be present in both the first and second polymerisation stages. For example, the solid Ziegler-Natta catalyst component comprising titanium, the co-catalyst, and the external donor of the compound of the formula (I) may be introduced into the reactor(s) in which the first polymerisation stage takes place and may be transferred into downstream reactor(s) in which the second polymerisation stage takes place. In some embodiments, the solid Ziegler-Natta catalyst component comprising titanium, the co-catalyst, and the external donor of the compound of the formula (I) may be introduced into a prepolymerisation reactor and this may be transferred into the reactor(s) in which the first polymerisation stage takes place and then subsequently into downstream reactor(s) in which the second polymerisation stage takes place.

According to a second aspect of the present invention, there is provided an ethylene polymerisation process comprising polymerising ethylene and an alpha-olefin comonomer having from 3 to 10 carbon atoms in the presence of a solid Ziegler-Natta catalyst component comprising titanium, a cocatalyst, and an external donor selected from bi-(oxygen containing ring) compounds of formula (I) above to produce an ethylene copolymer, wherein the molar ratio of the external donor to titanium of the catalyst component is less than 0.47.

In a preferred embodiment, the molar ratio of the external donor (i.e., compound(s) of the formula (I)) to titanium may be 0.46 or less, more preferably 0.45 or less. In a preferred embodiment, the molar ratio may be 0.44 or less. In a more preferred embodiment, the molar ratio may be 0.01 to 0.46, more preferably 0.02 to 0.45, yet more preferably 0.03 to 0.44. In some cases, the molar ratio of the external donor (compound (I)) to titanium is not 0.47. In some cases, the molar ratio of 2,2-di(2-tetrahydrofuryl)propane (DTHFP) to titanium is not 0.47.

As explained in relation to the first aspect of the present invention above, the molar ratio of external donor to titanium of the catalyst component influences the comonomer response of the reaction. By altering the molar ratio, it is possible to balance comonomer response and activity of the polymerisation reaction. This, in turn, can influence and improve the Chemical Composition Distribution (CCD) and/or provide an even short chain branching (SCB) profile across the molecular weight distribution of the final polymer. As a result, mechanical properties of the final polymer may be enhanced.

As noted above, in formula (I), each R^{1a}, R^{1b}, R^{2a}, R^{2b}, R^{3a}, R^{3b}, R^{4a}, R^{4b}, R^{5a} and R^{5b} are the same or different and are independently selected from hydrogen, linear or branched C₁ to C₈ alkyl, C₃ to C₈ alkylene, or wherein two or more of R^{1a}, R^{1b}, R^{2a}, R^{2b}, R^{3a}, R^{3b}, R^{4a}, R^{4b}, R^{5a} and R^{5b} can form a ring.

Examples of preferred linear or branched C₁ to C₈ alkyl groups are methyl, ethyl, n-propyl, i-propyl, n-butyl, sec-butyl, tert-butyl, pentyl and hexyl groups.

Examples for preferred C₃ to C₈ alkylene groups are pentylene and butylene groups.

R^{1a} and R^{1b} are preferably the same and are a linear C₁ to C₄ alkyl groups, more preferably methyl or ethyl; or R^{1a} and R^{1b} form a ring with the carbon atom they are attached to a ring with 3 to 7 carbon atoms, preferably cyclopentyl or cyclohexyl ring.

More preferably both R^{1a} and R^{1b} are methyl.

Each of R^{2a}, R^{2b}, R^{3a}, R^{3b}, R^{4a}, R^{4b}, R^{5a} and R^{5b} may be the same or different and preferably is independently H or a C₁ to C₂ alkyl groups, or two or more of R^{2a}, R^{2b}, R^{3a}, R^{3b}, R^{4a}, R^{4b}, R^{5a} and R^{5b} residues can form a ring. If one or more rings are formed by the residues R^{2a}, R^{2b}, R^{3a}, R^{3b}, R^{4a}, R^{4b}, R^{5a} and R^{5b}, these are more preferably formed by R^{3a} and R^{4a}, and/or R^{3b} and R^{4b}, and/or R^{4a} and R^{5a}, and/or R^{4b} and R^{5b}.

Preferably the residues R^{2a}, R^{2b}, R^{3a}, R^{3b}, R^{4a}, R^{4b}, R^{5a} and R^{5b} do not form rings and more preferably at most two of the residues R^{2a}, R^{2b}, R^{3a}, R^{3b}, R^{4a}, R^{4b}, R^{5a} and R^{5b} are methyl, the others are H.

Most preferably R^{2a}, R^{2b}, R^{3a}, R^{3b}, R^{4a}, R^{4b}, R^{5a} and R^{5b} are all H.

Furthermore both oxygen-containing rings are preferably saturated or partially unsaturated or unsaturated. Each partially unsaturated or unsaturated oxygen-containing ring can have one or two double bonds.

More preferably both oxygen-containing rings are saturated.

In one embodiment, the external donor selected from bi-(oxygen containing ring) compounds of formula (II): 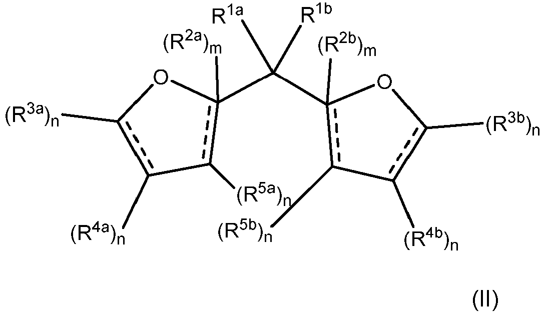 in which:
n is independently at each occurrence an integer selected from 1 and 2;
m is independently at each occurrence an integer selected from 0 and 1;
each R^{1a}, R^{1b}, R^{2a}, R^{2b}, R^{3a}, R^{3b}, R^{4a}, R^{4b}, R^{5a} and R^{5b} are the same or different and are independently selected from hydrogen, linear or branched C₁ to C₈ alkyl, C₃ to C₈ alkylene, preferably hydrogen, and linear or branched C₁ to C₈ alkyl; and the oxygen-containing rings are either saturated or completely unsaturated.

For the avoidance of doubt, each R^{2a}, R^{2b}, R^{3a}, R^{3b}, R^{4a}, R^{4b}, R^{5a} and R^{5b} may be the same or different and selected from hydrogen, linear or branched C₁ to C₈ alkyl, C₃ to C₈ alkylene, preferably hydrogen, and linear or branched C₁ to C₈ alkyl.

For the avoidance of doubt, when the carbon to which any given (R^{3a})ₙ, (R^{3b})ₙ, (R^{4a})ₙ, (R^{4b})ₙ, (R^{5a})ₙ, and (R^{5b})ₙ is attached is sp² hybridised, n is 1, and when the carbon to which any given (R^{3a})ₙ, (R^{3b})ₙ, (R^{4a})ₙ, (R^{4b})ₙ, (R^{5a})ₙ, and (R^{5b})ₙ is attached is sp³ hybridised, n is 2.

For the avoidance of doubt, when the carbon to which any given (R^{2a})ₘ and (R^{2b})ₘ is attached is sp² hybridised, m is 0, and when the carbon to which any given (R^{2a})ₘ and (R^{2b})ₘ is attached is sp³ hybridised, m is 1.

In formula (II) above, when the oxygen-containing rings are saturated, m is 1 and each R^{1a} and R^{1b} may be the same or different and independently selected from linear C₁ to C₄ alkyl groups, preferably methyl or ethyl. Additionally, n is 2 and each R^{2a}, R^{2b}, R^{3a}, R^{3b}, R^{4a}, R^{4b}, R^{5a} and R^{5b} may be the same or different and are independently selected from hydrogen and linear or branched C₁ to C₈ alkyl, preferably hydrogen or linear or branched C₁ to C₄ alkyl, more preferably hydrogen or methyl, yet more preferably hydrogen.

In formula (II) above, when the oxygen-containing rings are fully unsaturated saturated, m is 0 and thus R^{1a} and/or R^{1b} groups are absent. Additionally, n is 1 and each R^{2a}, R^{2b}, R^{3a}, R^{3b}, R^{4a}, R^{4b}, R^{5a} and R^{5b} may be the same or different and are independently selected from hydrogen and linear or branched C₁ to C₈ alkyl, preferably hydrogen or linear or branched C₁ to C₄ alkyl, more preferably hydrogen or methyl, yet more preferably hydrogen.

Examples of preferred external donors are 2,2-di(2-tetrahydrofuryl)propane (DTHP), whose structure is shown below; 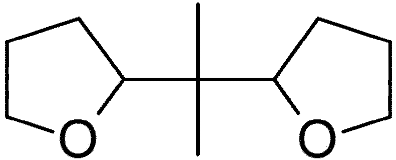 2,2- di-(2-furyl)propane, whose structure is shown below: 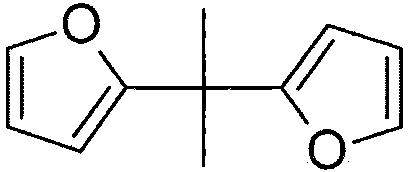 and isomers or mixtures thereof.

In a particular embodiment, the external donor selected from bi-(oxygen containing ring) compounds of formula (III): 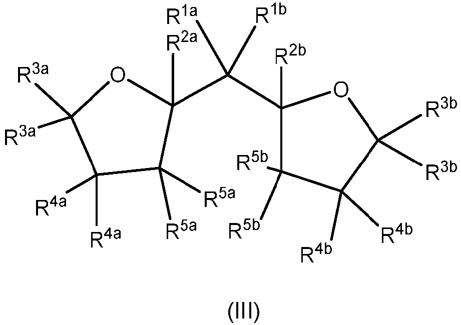 in which:
each R^{1a}, R^{1b}, R^{2a}, R^{2b}, R^{3a}, R^{3b}, R^{4a}, R^{4b}, R^{5a} and R^{5b} are the same or different and are independently selected from hydrogen, linear or branched C₁ to C₈ alkyl, C₃ to C₈ alkylene,
preferably hydrogen, and linear or branched C₁ to C₈ alkyl.

In a more particular embodiment, the external donor selected from bi-(oxygen containing ring) compounds of formula (III): 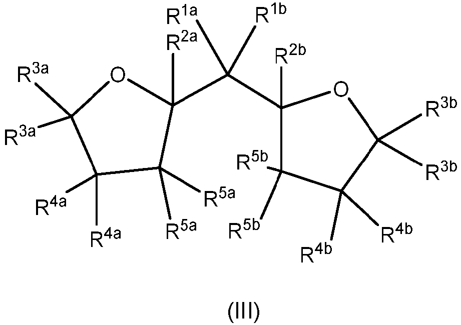 in which:
each R^{1a} and R^{1b} is the same or different and independently selected from linear C₁ to C₄ alkyl groups, preferably methyl or ethyl;
each R^{2a}, R^{2b}, R^{3a}, R^{3b}, R^{4a}, R^{4b}, R^{5a} and R^{5b} are the same or different and are independently selected from hydrogen and linear or branched C₁ to C₈ alkyl, preferably hydrogen or linear or branched C₁ to C₄ alkyl, more preferably hydrogen or methyl, yet more preferably hydrogen.

In the most preferred embodiment, 2,2-di(2-tetrahydrofuryl)propane (DTHFP) is used. DTHFP is typically a 1:1 mol/mol diastereomeric mixture of D,L-(rac)- DTHFP and meso-DTHFP. The structure of DTHFP is shown below:

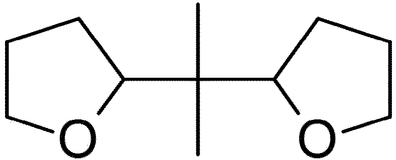

In the processes of the present disclosure, ethylene is polymerised with an alpha-olefin comonomer having from 3 to 10 carbon atoms in the first and/or second polymerisation stage. The alpha-olefin comonomer having from 3 to 10 carbon atoms may be propylene, 1-butene, 1-heptene and/or 1-hexene. Preferably, the alpha-olefin comonomer having from 3 to 10 carbon atoms is 1-butene or 1-hexene.

The processes of the present disclosure may be employed to produce an ethylene copolymer having a comonomer content within the range of from 0.1 to 20 weight %, preferably from 0.5 to 15 weight %, more preferably from 1.0 to 10 weight %, based on the total weight of the ethylene copolymer. Where a multistage polymerisation reaction is used, the ethylene copolymer that is withdrawn from the most downstream reactor may have a comonomer content of within the range from 0.1 to 20 weight %, preferably from 0.5 to 15 weight %, more preferably from 1.0 to 10 weight %. This ethylene copolymer preferably has a multimodal molecular weight distribution. The ethylene copolymer may comprise the polymer components formed in the polymerisation stages of the multistage process.

The first polymerisation stage may be a slurry phase polymerisation stage.

The second polymerisation stage may be a gas phase polymerisation stage.

Preferably, where a multistage polymerisation is employed, the first polymerisation stage comprises:
ai) polymerising ethylene in the presence of solid Ziegler-Natta catalyst component to produce in a first slurry reactor an initial polymer component;
aii) transferring the initial polymer component to a second slurry reactor and polymerising ethylene in the presence of the initial polymer component and solid Ziegler-Natta catalyst component to produce the first polymer component;
wherein:
   optionally, ethylene in the first slurry reactor and/or second slurry reactor is co-polymerised with an alpha-olefin comonomer having from 3 to 10 carbon atoms; and/or
   optionally, ethylene in the first slurry reactor and/or second slurry reactor is polymerised in the presence of said external donor.

### Polymerisation

As disclosed above, the first aspect, the present disclosure relates to a multistage process. while the second aspect of the present disclosure may be a single stage or multistage process. Preferably, the second aspect of the present disclosure is also a multistage process.

Where a multistage process is employed, the process comprises polymerising ethylene in the presence of the solid ZN catalyst component, and the cocatalyst to produce a first polymer component in a first polymerisation stage. Preferably, ethylene may also be co-polymerised with an alpha-olefin comonomer having from 3 to 10 carbon atoms to produce the first polymer component. The process also comprises polymerising ethylene in a second polymerisation stage. The second polymerisation stage can take place in a downstream reactor, preferably a gas phase reactor, in the presence of the first polymer component to produce a second polymer component. The ethylene in the downstream reactor can be co-polymerised with an alpha-olefin comonomer having from 3 to 10 carbon atoms to produce the second polymer component. The comonomer used to form the first polymer component and the second polymer component may be the same or different.

Where the first and second polymer components are copolymers, the comonomer content of the second polymer component produced in the second polymerisation stage may be higher than the comonomer content of the first polymer component produced in the first polymerisation stage.

The molecular weight of the first polymer component may be lower than the molecular weight of the second polymer component.

To distinguish the reactor(s) in which the first polymer component is produced from the downstream gas phase reactor in which the second polymer component is produced, the reactor(s) in which the first polymer component is produced can be referred to as the upstream reactor(s). Polymerisation in the upstream reactor(s) may be referred to upstream polymerisation, while polymerisation in the downstream gas phase reactor(s) may be referred to as downstream gas phase polymerisation.

The first polymer component may be transferred to the downstream gas phase reactor from the upstream reactor(s), such that the second olefin polymer component is produced in the presence of first polymer component. Additionally, potential excess of cocatalyst may be transferred from the upstream reactor(s) to the downstream gas phase reactor.

Preferably, the same type or the same catalyst component and the same type or the same cocatalyst are used in each step. More preferably, the same catalyst component and the same cocatalyst are used in each step. Potential excess of cocatalyst may be transferred from prepolymerisation (if employed) to subsequent polymerisation steps in sequence.

### Prepolymerisation

The process may include a prepolymerisation step. The purpose of the prepolymerisation is to polymerise a small amount of polymer onto the catalyst at a low temperature and/or a low monomer concentration. By prepolymerisation, it may be possible to improve the performance of the catalyst system in the subsequent polymerization process stages.

The catalyst component and cocatalyst are preferably introduced to the prepolymerisation step when a prepolymerisation step is present. Preferably, the reaction product of the prepolymerisation step is introduced to the polymerisation in which the first polymer component is produced.

In some instances, the solid catalyst component and the cocatalyst can be fed separately. Here, it is possible that only a part of the cocatalyst is introduced into the prepolymerisation stage and the remaining part into subsequent polymerisation stages. Also in such cases it may not be necessary to introduce as much cocatalyst into the prepolymerisation stage to achieve sufficient polymerisation therein.

It is understood within the scope of the invention, that the amount or polymer produced in the prepolymerisation lies within 1 to 7 wt% in respect to the final ethylene copolymer.

### First polymerisation stage

As discussed above, the process of the present disclosure preferably comprises polymerising, in an upstream reactor, ethylene, optionally in the presence of at least an alpha olefin comonomer, in the presence of a ZN catalyst component, and a cocatalyst to produce a first polymer component.

The ethylene may be polymerised to form a homopolymer as the first polymer component. Alternatively, the ethylene may be polymerised to form a copolymer of ethylene and the at least one alpha olefin comonomer as the first polymer component.

Where an alpha olefin comonomer is used, the alpha olefin comonomer may be selected from a C₃ to C₁₀ alkene. Preferably, the alpha olefin comonomer has 3 to 10 carbon atoms, for example, 4 to 8 or 4 to 6 carbon atoms. The alpha-olefin comonomer may be propylene, 1 -butene, 1-pentene, 1 -hexene, 4-methyl-1-pentene, 1- heptene, 1-octene, 1 -nonene and 1 -decene. Most preferably, the comonomer is 1 -butene and/or 1-hexene, 1-butene, 1-heptene and/or 1-hexene. Most preferably, the comonomer is selected from at least one 1-butene and 1-hexene.

The alpha olefin comonomer content of the first polymer component may within the range from 0 to 25 weight%, preferably 0 to 20 weight%, more preferably 0 to 16 weight%.

The first polymer component may be an ethylene homopolymer.

Alternatively, the first polymer component may be an ethylene-alpha olefin copolymer. Where the first polymer component is an ethylene-alpha olefin copolymer, the alpha olefin comonomer content of the first polymer component may greater than 0 to 25 weight%, preferably greater than 0 to 20 weight%, more preferably greater than 0 to 16 weight%.

The first polymerisation stage may take place in one or more slurry polymerisation reactor(s), more preferably in at least two (e.g., two) or at least three (e.g. three) slurry phase reactors. Where, for example, at least three (e.g., three) slurry reactors are used, this does not include a slurry reactor for prepolymerisation.

Slurry ethylene polymerisation can take place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane. In bulk propylene polymerization, propylene acts as monomer and diluent at the same time.

Polymer particles of the first polymer component formed by polymerisation, together with the catalyst fragmented and dispersed within the particles, may be suspended in the inert diluent. The slurry is agitated to enable the transfer of reactants from the fluid into the particles.

The ethylene content in the fluid phase of the slurry may be from 2 to about 99 % by mole, preferably from about 3 to about 96% by mole and in particular from about 5 to about 90 % by mole. In some embodiments, the ethylene content in the fluid phase of the slurry may be from 2 to about 50 % by mole, preferably from about 3 to about 20 % by mole and in particular from about 5 to about 15 % by mole. The benefit of using higher olefin concentration is that the productivity of the catalyst can be increased.

The temperature in the upstream polymerisation may be from 40 to 115 °C, preferably from 60 to 110 °C and in particular from 70 to 100 °C. The pressure is from 1 to 150 bar, preferably from 10 to 100 bar.

The residence time in the upstream reactor (including any prepolymerisation reactor employed) may be typically from 0.15 h to 3.0 h, preferably from 0.20 h to 2.0 h and in particular from 0.30 to 1.5 h.

It is sometimes advantageous to conduct the slurry polymerisation above the critical temperature and pressure of the fluid mixture. Such operation is described in US-A-5391654. In such operation, the temperature is typically from 70 to 110 °C, preferably from 80 to 105 °C and the pressure is from 40 to 150 bar, preferably from 50 to 100 bar.

Where the upstream polymerisation is carried out by slurry polymerisation, the slurry polymerisation may be conducted in any known reactor used for slurry polymerisation. Such reactors include a continuous stirred tank reactor or a loop reactor. It is especially preferred to conduct the polymerisation in loop reactor. In such reactors the slurry is circulated with a high velocity along a closed pipe by using a circulation pump. Loop reactors are generally known in the art and examples are given, for instance, in US A-4582816, US-A-3405109, US-A-3324093, EP-A-479186, and US-A-5391654. The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211 , US-A-3242150 and EP- A-1310295. Continuous withdrawal is disclosed, among others, in EP-A-891990, EP-A- 1415999, EP-A-1591460 and WO-A-2007/025640. The continuous withdrawal is advantageously combined with a suitable concentration method, as disclosed in EP-A- 1310295, EP-A-1591460, and EP3178853B1.

Hydrogen may be fed into the reactor to control the molecular weight of the polymer as known in the art. Furthermore, one or more alpha-olefin comonomers may be added into the reactor to control the density of the polymer product. The actual amount of such hydrogen and comonomer feeds depends on the catalyst that is used and the desired melt index (or molecular weight) and density (or comonomer content) of the resulting polymer.

### Second stage polymerisation

As mentioned above, the second stage polymerisation may be a gas phase polymerisation.

The polymerisation in the gas phase reactor may be a copolymerisation reaction.

Where an alpha olefin comonomer is used, the alpha olefin comonomer may be selected from a C₃ to C₁₀ alkene. Preferably, the alpha olefin comonomer has 3 to 10 carbon atoms, for example, 4 to 8 or 4 to 6 carbon atoms. The alpha-olefin comonomer may be propylene, 1 -butene, 1-pentene, 1 -hexene, 4-methyl-1-pentene, 1- heptene, 1-octene, 1 -nonene and 1 -decene. Most preferably, the comonomer is 1 -butene and/or 1-hexene, 1-butene, 1-heptene and/or 1-hexene. Most preferably, the comonomer is selected from at least one 1-butene and 1-hexene.

The alpha olefin comonomer content of the second polymer component may be from 0 to 55 weight%, preferably from 0 to 40 weight%, more preferably from 0 to 25 weight%.

The same or different type of alpha olefin comonomer may be used to form the first polymer component and second polymer component. Alternatively either or both of the first polymer component and second polymer components may be an ethylene homopolymer.

Where the second polymerisation stage is a gas phase polymerisation, the gas phase polymerisation may be conducted in any known reactor used for gas phase polymerisation. Such reactors include a fluidized bed reactor and a fast fluidized bed reactor or in any combination of these. When a combination of reactors is used then the polymer is transferred from one polymerisation reactor to another. Furthermore, a part or whole of the polymer from a polymerisation stage may be returned into a prior polymerisation stage.

The temperature in the gas phase polymerisation may be from 50 to 100 °C, preferably from 65 to 90 °C.

Generally, the operating pressure in the gas phase polymerisation may be from 10 to 40 barg, preferably 15 to 30 barg.

The residence time in the gas phase polymerisation is from 1.0 h to 4.5 h, preferably from 1.5 h to 4.0 h and in particular from 2.0 to 3.5 h. The residence time in gas phase polymerisation may be longer than the residence time in the upstream reactor(s) by at least 30%, preferably at least 40% or at least 50%.

The gas phase polymerisation is preferably conducted in a gas-solids fluidized bed(s).

The product from the gas phase reactor may be transferred to a separator (e.g., low pressure separator) to facilitate the separation of entrained gases from the polymer product. In some instances, it may be possible for a portion of the first product from the slurry loop reactor to be passed directly to the separator located downstream of the gas phase reactor bypassing the gas phase reactor.

### Polymerization catalyst

The catalyst system used in the present disclosure comprises a solid Ziegler - Natta catalyst component comprising titanium. The catalyst component is preferably a supported catalyst component.

Suitable solid Ziegler-Natta catalyst components preferably contain a magnesium compound, an aluminium compound and a titanium compound supported on a particulate support.

The particulate support can be an inorganic oxide support, such as silica, alumina, titania, silica-alumina and silica-titania. Preferably, the support is silica. Alternatively, MgCl₂-based support may be used.

The average particle size of the silica support can be typically from 5 to 100 µm. However, it has turned out that advantages can be obtained if the support has an average particle size from 10 to 30 µm, preferably from 15 to 25 µm, or from 18 to 25 µm. Alternatively, the support may have an average particle size of from 30 to 80 µm, preferably from 30 to 50 µm. Examples of suitable support materials are, for instance, ES747JR produced and marketed by Ineos Silicas (former Crossfield), and SP9-491, produced and marketed by Grace.

Preferably, the solid Ziegler-Natta catalyst component further comprises magnesium, optionally aluminium and optionally an internal donor supported on an inorganic oxide support, such as silica.

The catalyst component may contain magnesium. The magnesium may be in the form of a magnesium compound. The magnesium compound may be a reaction product of a magnesium dialkyl and an alcohol. The alcohol may be a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

Where aluminium is present in the catalyst component, the aluminium may take the form of an aluminium compound. An example of such a compound is a chlorine-containing aluminium alkyl. Especially preferred compounds are aluminium alkyl dichloride and aluminium alkyl sesquichloride.

The titanium compound may be a halogen containing titanium compound, preferably chlorine containing titanium compound. Especially preferred titanium compound is titanium tetrachloride.

The catalyst component can be prepared by sequentially contacting the carrier with the above mentioned compounds, as described in EP-A-688794 or WO-A-99/51646 . Alternatively, it can be prepared by first preparing a solution from the components and then contacting the solution with a carrier, as described in WO-A-01/55230 .

Another group of suitable Ziegler-Natta catalyst systems contain a solid ZN catalyst component containing a titanium compound together with a magnesium halide compound acting as a support. Thus, the catalyst component contains a titanium compound on a magnesium dihalide, like magnesium dichloride. Such catalyst components are disclosed, for instance, in WO-A-2005/118655 and EP-A-810235.

Still a further type of Ziegler-Natta catalyst systems comprise catalyst components prepared by a method, wherein an emulsion is formed, wherein the active components form a dispersed, i.e. a discontinuous phase in the emulsion of at least two liquid phases. The dispersed phase, in the form of droplets, is solidified from the emulsion, wherein catalyst in the form of solid particles is formed. The principles of preparation of these types of catalysts are given in WO-A-2003/106510.

### Cocatalyst

The Ziegler - Natta catalyst component is used together with an activator, herein also referred to as cocatalyst. Suitable activators are Group 13 metal compounds, typically Group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator (cocatalyst) is used depends on the specific catalyst component and activator. Typically triethylaluminium is used in such amount that the molar ratio of aluminium to the transition metal, like Al/Ti, is from 1 to 1000, preferably from 3 to 100 and in particular from about 5 to about 30 mol/mol.

The solid Ziegler - Natta catalyst component, the cocatalyst and the external donor together form a catalyst system.

### Description of methods

### Melt flow rate

Melt flow rate (MFR) was determined according to ISO 1133 at 190 °C. The load under which the measurement is conducted is given as a subscript. Thus, the MFR under the load of 2.16 kg is denoted as MFR₂.

### Activity of the catalyst

The activity of the catalyst (in kg/(g*h)) was determined in a batch polymerisation experiment as the amount of polymer produced in kg divided by the amount of catalyst fed into the polymerisation reactor in g) per unit of the residence time in the reactor (h).

### Molecular weight averages, molecular weight distribution (Mn, Mw, Mz, MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas: ${M}_{n} = \frac{{\sum }_{i = 1}^{N} {A}_{i}}{{\sum }_{i = 1}^{N} \left({A}_{i}/{M}_{i}\right)}$ (1) ${M}_{W} = \frac{{\sum }_{i = 1}^{N} \left({A}_{i}\times {M}_{i}\right)}{{\sum }_{i = 1}^{N} {A}_{i}}$ (2) ${M}_{Z} = \frac{{\sum }_{i = 1}^{N} \left({A}_{i}\times {M}_{i}^{2}\right)}{{\sum }_{i = 1}^{N} \left({A}_{i}\times {M}_{i}\right)}$ (3)

For a constant elution volume interval ΔVᵢ, where Aᵢ and Mᵢ are the chromatographic peak slice area and polyolefin molecular weight (MW), respectively associated with the elution volume, Vᵢ, where N is equal to the number of data points obtained from the chromatogram between the integration limits.

A high temperature GPC instrument, equipped with a multiple band infrared detector model IR5 (PolymerChar, Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used.

The chromatographic system was operated at 160 °C at a constant flow rate of 1 mL/min. 200 µL of sample solution was injected per analysis. Data collection was performed by using PolymerChar GPC-one software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at room temperature over several hours. The conversion of the polystyrene peak molecular weight to polyethylene molecular weights is accomplished by using the Mark Houwink equation and the following Mark Houwink constants:
∘ K_{PS} = 19 x 10⁻³ mL/g, α_{PS} = 0.655
∘ K_{PE} = 39 x 10⁻³ mL/g, α_{PE} = 0.725
∘ A third order polynomial fit was used to fit the calibration data.

All samples were prepared in the concentration range of 0.5 -1 mg/ml and dissolved at 160 °C for 3 hours for PE under continuous gentle shaking.

### Determination of the SCB/1000TC along the molecular weight (logM)

The IR 5 detector provides different detector signals, which were designated as concentration signal (broad spectral band covering the spectral region from 2800 cm⁻¹ to 3000 cm⁻¹), methyl (CH₃) (narrow band filter centred at 2959 cm⁻¹) and methylene (CH₂) (centred at 2928 cm⁻¹) signal. The ratio of the methyl to the methylene detector signals is correlating to the total amount of methyl (CH₃) per 1000 carbon atoms (CH₃/1000TC) (A. Ortin, B. Monrabal, J. Montesinos, P. del Hierro, Macromol. Symp. 2009, 282, 65-70). The determination of the CH₃/1000TC using an IR5 detector can be performed by calibrating the CH₃/CH₂ ratio versus the nominal CH₃/1000TC content. A linear fit was used for this purpose.

The branching degree of all calibration set samples was determined by ¹³C melt-state NMR as described in K. Klimke, M. Parkinson, C. Piel, W. Kaminsky, H. W. Spiess, M. Wilhelm, Macromol. Chem. and Phys., 2006, 207, 382; M. Parkinson, K. Klimke, H. W. Spiess, M. Wilhelm, Macromol. Chem. and Phys., 2007, 208, 2128. The calibration set used for this method includes 17 different short chain branched polyethylenes, both single site catalysed and fractions of Ziegler Natta catalysed polyethylene-co-butene, polyethylene-co-hexene and polyethylene-co-octene covering an overall branching level up to 80 methyl groups per 1000 carbons (CH3/1000C).

The short chain branching was determined as methyl branching per 1000 total carbons and might be corrected for up to 2 methyl chain end groups per polymer chain.

### Determination of the Slope Value (SV)

After plotting the concentration signal and the SCB/1000TC content along the log M axis the determination of the Slope Value is straight forward and can be obtained in 4 steps:
1. The log M value at half height of the peak maximum were determined as logM₁ and logM₂ (log M₁ < logM₂).
2. The corresponded SCB/1000TC content at logM₁ (SCB/1000TC₁) and logM₂ (SCB/1000TC₂) were determined
3. The CC slope can then be calculated by using the following formula: $slope = \frac{\frac{SCB}{1000 {TC}_{2}} - \frac{SCB}{1000 {TC}_{1}}}{{logM}_{2} - {logM}_{1}}$
4. The slope Value (SV) is obtained in the following way: $SV = slope + \frac{{\left(2+branch point length\right)}^{1.2}}{5.3}$ and the branch point length is CN-2, wherein CN is the number of carbon atoms in the comonomer, e.g., 2 for 1-butene, 4 for 1-hexene.

### Cross Fractionation Chromatography (a-TREF x SEC)

The Chemical Composition Distribution (CCD) as well as the determination of the molecular weight distribution at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the cross-fractionation chromatography (TREF x SEC). A four-band IR5 infrared detector (PolymerChar, Valencia, Spain) was used to monitor the concentration. Around 8 mg of the polymer sample was dissolved in 8 ml TCB in the stainless steel vessel for 150 min at 160 °C. Once the sample was completely dissolved, 200 µl was injected and loaded on the TREF column. The TREF column containing the sample was stabilized for 60 minutes at 110 °C and afterwards cooled down to a temperature of 35°C by applying a constant cooling rate of 0.1 °C/min. A discontinuous elution process is performed using the following temperature steps: (35, 40, 45, 50, 53, 56, 59, 62, 64, 66, 69, 72, 76, 79, 82, 85, 89, 91, 93, 95, 97, 100, 110, and 120) Corresponding molecular weight averages (Mn, Mw and Mv) of the eluted samples were determined as described above.

### Calculation of the Homo Polymer Fraction (HPF) and Copolymer Fraction (CPF) calculation.

The homopolymer fraction (HPF) and copolymer fraction (CPF) are defined in the following way: $CPF = 100 - HPF$

Due to the slightly dependence of the TREF profile on the low MW part, the molecular weight limit of the low MW limit is elution temperature (Tₑₗ) dependent. The low MW limit was determined using the following formula: $Low MW limit \left(for HPF Fraction\right) = 0.0125 * {T}_{el} + 2.875$

Taking this into account the HPF fraction is calculated using the following approach. $HPF in wt . - % = \frac{{\sum }_{i = 35}^{94} {\sum }_{j}^{j = 0 , 0125 ∗ i + 2 , 875} {H}_{ij} + {\sum }_{i = 94}^{140} {\sum }_{j = 2}^{8} {H}_{ij} +}{{\sum }_{i = 60}^{140} {\sum }_{j = 2}^{8} {H}_{ij}}$

Where Hᵢⱼ is the 2D differential distribution at the corresponded elution temperature (Tel) i and the logM value j, obtained with the corresponded data processing software.

### Calculation of Low Molecular Weight Copolymer Fraction at the soluble fraction (LMCF-SF)

The low molecular weight copolymer fraction is defined in the following way: $LMCF - SF = wt % \left(SF\right) * \frac{{\sum }_{j = 2}^{3.625} {H}_{i = 35 , j}}{{\sum }_{j = 2}^{8} {H}_{i = 35 , j}}$

Where the soluble fraction (SF) is the fraction which elutes at 35°C and the low molecular weight fraction is defined as the fraction eluting up to a molar mass of 4216 g/mol (logM = 3.625).

### Comparative Example 1 (CE1)

In this example, propane (as diluent), ethylene, hydrogen, and triethylaluminium (TEAL) were introduced into a reactor (i.e., total TEAL/Ti of 15 mol/mol). A titanium-containing Ziegler-Natta catalyst component, Lynx 200 supplied by Grace, was then introduced into the reactor. The reaction mixture was prepolymerized under pre-polymerization conditions at T = 60 °C and P = 25 bar for 20 min at a H₂/C₂ ratio of 50 mol/kmol in the liquid phase and C₂ concentration of 4 mol % in the liquid phase.

After prepolymerisation, the mixture was subjected to a slurry polymerization step at 85 °C. Slurry polymerisation was performed for 60 min at a pressure of 41.4 bar after increasing the reaction temperature from 60 to 85 °C within 5 min and at the same time adding H₂. After the temperature reached 85 °C, 12 ml of comonomer (1-hexene) was added resulting in a total C₆/C₂ ratio of 610 mol/kmol in the liquid phase. The H₂/C₂ ratio in the liquid phase was 190 mol/kmol and C₂ concentration in the liquid phase was 6 mol %. The catalyst activity was 32 kg/gcat/h, and the bulk density of the polymer powder produced by the slurry polymerisation step was 304 kg/m³.

The resulting polymer had an MFR₂ (ISO 1133 at 190°C) of 85 g/10 min, a weight average molecular weight of 45650 g/mol, and a polydispersity index (PDI) of 6.7. The C₆ monomer content was 5.8 wt%.

### Comparative Example 2 (CE2)

In this Example, a titanium-containing Ziegler-Natta catalyst component, Lynx 200 supplied by Grace, was contacted with tetrahydrofuran (THF) as an external donor in a molar ratio of Do/Ti equal to 0.1 mol/mol and for 15 mins.

Propane (as diluent), ethylene, hydrogen, and TEAL were introduced into a reactor (i.e., total TEAL/Ti of 15 mol/mol). The THF-treated catalyst was then introduced into the reactor. The reaction mixture was prepolymerized under pre-polymerization conditions at T = 60 °C and P = 25 bar for 20 min at a H₂/C₂ ratio of 50 mol/kmol in the liquid phase and a C₂ concentration of 4 mol % in the liquid phase.

After prepolymerisation, the mixture was subjected to a slurry polymerization step at 85°C. Slurry polymerisation was performed for 60 min at a pressure of 41,4 bar after increasing the reaction temperature from 60 to 85 °C within 5 min and at the same time adding H₂. After the temperature reached 85 °C, 12 ml of comonomer (1-hexene) was added resulting in a total C₆/C₂ ratio of 610 mol/kmol in the liquid phase. The H₂/C₂ ratio in the liquid phase was 190 mol/kmol. The C₂ concentration in the liquid phase was 6 mol %. The catalyst activity was 32.5 kg/gcat/h, and the bulk density of the polymer powder produced by the slurry polymerisation step was 308 kg/m³.

The resulting polymer had an MFR₂ (ISO 1133 at 190°C) of 55 g/10 min, a weight average molecular weight of 47300 g/mol, and a polydispersity index (PDI) of 6.3. The C₆ monomer content was 5.0 wt%.

### Inventive Example 1 (IE1)

In this Example, a titanium-containing Ziegler-Natta catalyst component, Lynx 200 supplied by Grace, was contacted with 2,2-di(2-tetrahydrofuryl)propane (DTHFP) as an external donor in a molar ratio of Do/Ti equal to 0.1 mol/mol and for 15 mins.

Propane (as diluent), ethylene, hydrogen, and TEAL were introduced into a reactor (i.e., total TEAL/Ti of 15 mol/mol). The DTHFP-treated catalyst was then introduced into the reactor. The reaction mixture was prepolymerized under pre-polymerization conditions at T = 60 °C and P = 25 bar for 20 min at a H₂/C₂ ratio of 50 mol/kmol in the liquid phase and a C₂ concentration of 4 mol% in the liquid phase.

After prepolymerisation, the mixture was subjected to a slurry polymerization step at 85°C. Slurry polymerisation was performed for 60 min at a pressure of 41.4 bar after increasing the reaction temperature from 60 to 85 °C within 5 min and at the same time adding H₂. After the temperature reached 85 °C, 12 ml of comonomer (1-hexene) was added resulting in a total C₆/C₂ ratio of 610 mol/kmol in the liquid phase. The H₂/C₂ ratio in the liquid phase was 190 mol/kmol and the C₂ concentration was 6 mol %. The catalyst activity was 28 kg/gcat/h, and the bulk density of the polymer powder produced by the slurry polymerisation step was 325 kg/m³.

The resulting polymer had an MFR₂ (ISO 1133 at 190°C) of 42 g/10 min, a weight average molecular weight of 47600 g/mol, and a polydispersity index (PDI) of 6.1. The C₆ monomer content was 4.5 wt%.

Table 1 shows a comparison of the molecular weight distributions (MWDs), CC slopes and SV slopes of the polymers produced as described in the examples above. The presence of DTHFP in IE1 affects both the MWD and how the comonomer composition (CC) is distributed along log M. More specifically, the MWD shifts slightly to larger molecular weight values while the CC along log M becomes more even (CC slope reduces in magnitude, showing better distribution of comonomer across the MWD).

**Table 1**

| | **CC slope** | **SV** | **Mw in kg/mol** | **Mz in kg/mol** |
|---|---|---|---|---|
| CE1 | -3.7 | -2.1 | 45.6 | 434 |
| CE2 | -2.8 | -1.2 | 47.3 | 312 |
| IE1 | -2.0 | -0,38 | 47.6 | 266 |

A Cross Fractionation Chromatography analysis (a-TREF x SEC) on the polymers of CE1, CE2 and IE1 also showed that the presence of the DTHFP as external donor decreased the soluble fraction of low molecular weight polymers (eluting at 35 °C). The results are shown in Table 2 below.

It can be seen that DTHFP reduces the soluble fraction (SF) of the polymer. Thus, the SF is lower in IE1 compared to both CE1 and CE2.

In the SF, the high molecular weight fraction is more pronounced in IE1, as indicated by an increase in the Mz of the SF. This means that the low molecular weight fraction having high comonomer content is reduced from 7.1 to 4.9 through the use of DTHFP. Furthermore, it can be seen that the copolymer fraction excluding the soluble fraction (i.e., elution temperature in the range between 40 - 95 °C) increases from 41.6 to 44.7 through the use of DTHFP. On the other hand, the high molecular weight fraction (also expressed as homo-PE) is relatively unchanged across CE1, CE2 and IE1. This indicates that the chemical composition distribution in the TREF fraction eluting between 40 and 95°C is narrowed through the use of DTHFP.

**Table 2**

| | **Soluble Fraction (SF) (eluting at 35°C)** | **Mz (SF) in kg/mol** | **Low MW copolymer fraction in SF** | **Copolymer fract. (eluting at 40-95°C)** | **Homo - PE fract. (eluting above 95°C)** |
|---|---|---|---|---|---|
| CE1 | 15.9 | 61.9 | 7.1 | 41.6 | 49.6 |
| CE2 | 12.8 | 69.3 | 5.5 | 42.5 | 50.2 |
| IE1 | 11.6 | 76.2 | 4.9 | 44.7 | 48.6 |

### Comparative Examples 3 and 4 (CE3, CE4) and Inventive Examples 2 to 5 (IE2 to IE5)

The following protocols were used to prepare catalyst slurries and perform the polymerisation reactions using these catalyst slurries. The catalyst activation and polymerisation conditions are summarised in Tables 3 and 4 below. The catalyst component used was a titanium-containing Ziegler-Natta catalyst component, Lynx 200 supplied by Grace.

### Preparation of catalyst slurry with pre-activation with triethylaluminium (TEAL).

Catalyst component was preactivated by contacting the catalyst with TEAL for 45 seconds. A catalyst slurry was formed by suspending about 15 mg of the catalyst component in 6 ml of toluene. The catalyst slurry was then added to a solution of triethylaluminium and after 45 seconds an aliquot of the catalyst slurry (0.03 g of catalyst) was injected into the polymerization reactor.

### Preparation of catalyst slurry with pre-activation with triethylaluminium (TEAL) and contacting with donor (DTHFP).

A catalyst slurry was formed by suspending about 15 mg of the catalyst component in 6 ml of toluene. The catalyst slurry was then added to a solution of triethylaluminium and after 45 seconds an aliquot of the catalyst slurry (0.03 g of catalyst) was added to a solution of DTHFP and the resulting mixture was injected into the polymerization reactor.

### Preparation of catalyst slurry without pre-activation.

A catalyst slurry was formed by suspending about 15 mg of the catalyst component in 6 ml of toluene and an aliquot of this catalyst slurry (0.03 g of catalyst component) was injected into the polymerization reactor.

### Slurry ethylene/1-butene co-polymerization (or ethylene homopolymerization)

4 ml of heptane and TEAL as scavenger were added to the polymerisation reactor (reactor volume: 25ml) at room temperature. A pre-pressurization test for leaks was carried out by filling the reactor with 40 psi of nitrogen (about 2.7 bar). The reactor was heated to 30°C and then filled with compressed 1-butene and hydrogen. The reactor temperature was then raised to the desired values for polymerisation. Ethylene was introduced to the desired pressure and catalyst was injected. The pressure was kept constant after the catalyst injection by feeding monomer. At the end of the polymerization the catalyst system was

deactivated by adding CO₂ up to 250 psi. Table 3 shows polymerisation conditions using two different C4/C2 ratios.

**Table 3**

| Parameters | unit | Lower C4/C2 ratio | Higher C4/C2 ratio |
|---|---|---|---|
| | | | |
| **Temperature** | °C | 85 | 85 |
| **H2/C2 ratio** | mol/kmol | 84 | 84 |
| **C4/C2 ratio** | mol/kmol | 1172 | 1467 |
| **Reactor pressure** | Psi | 117 | 117 |
| **C4** | µL | 178 | 223 |
| **H2 pressure** | Psi | 53 | 53 |
| **Poly. Time*** | min | 90 | 90 |
| **Cocatalyst** | | TEAL | TEAL |

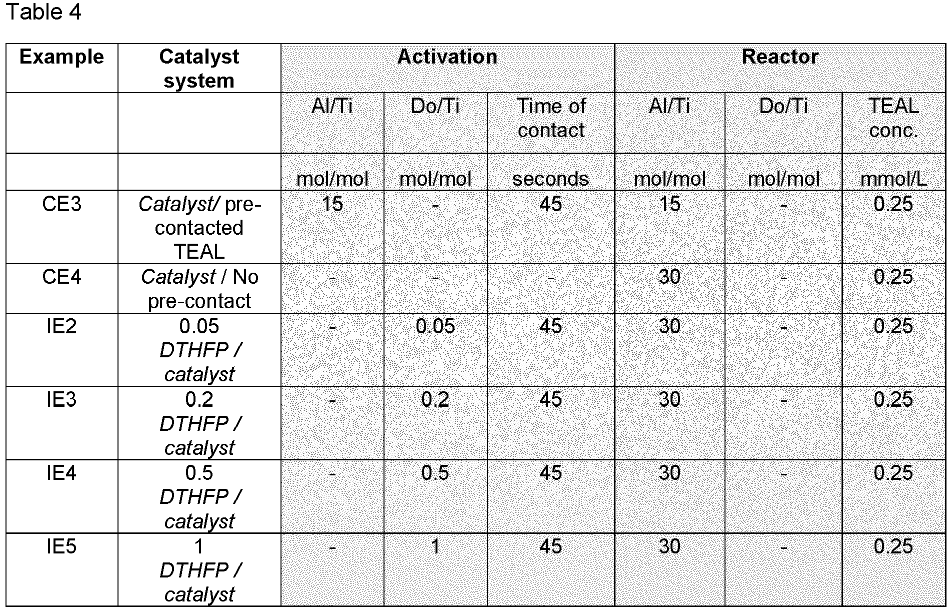

The effect of DTHFP/Ti molar ratios of 0.05, 0.2, 0.5 and 1 were investigated.

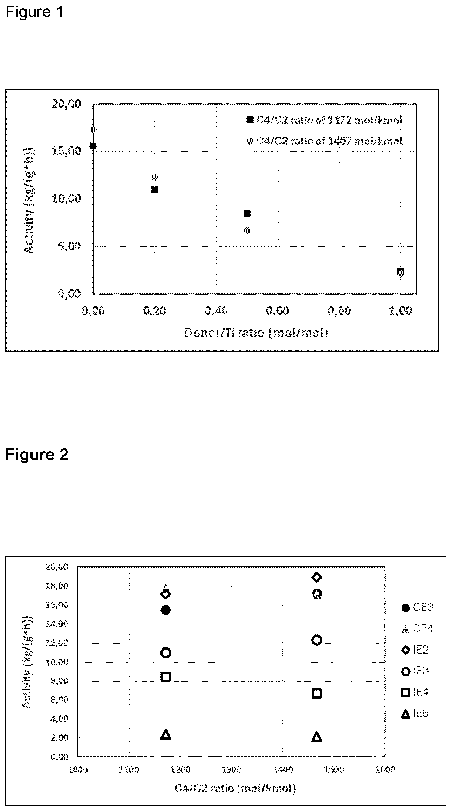

As shown in Figure 1, under two different C₄/C₂ ratios in the reactor (1172 and 1467 mol/kmol, respectively) there is a drop in overall catalyst activity as the DTHFP / Ti molar ratio was increased from 0.2, 0.5 to 1. As shown in Figure 2, the highest average activity (comparable to that of CE3) was obtained with low DTHFP / Ti molar ratio of 0.05.

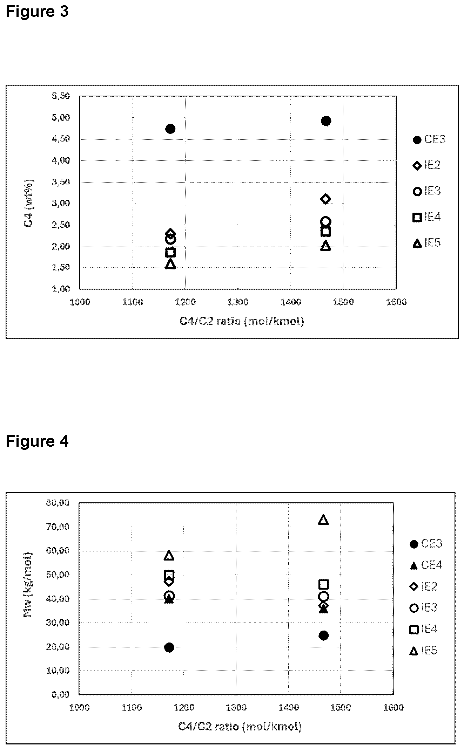

Figure 3 shows that comonomer response decreased with increasing in DTHFP/Ti molar ratio. When a DTHFP/Ti molar ratio of 0.05 was used, the comonomer response was comparable to that of CE4, see Figure 3. On the other hand, at DTHFP / Ti molar ratio of 0.05, the average activity of the catalyst was comparable to that of CE4, see Figure 2. Therefore by adjusting the DTHFP/Ti molar ratio, it was possible to obtain high activity while maintaining the desired effects of the donor.

Approximate Mw values (from rapid GPC / PPR) for 1-butene co-polymers produced are shown in Figure 4. As shown in Figure 4, by using DTHFP as an external donor, it was possible to increase Mw capacity of the catalyst. It was also observed that, when THF and MeTHF were used as external donors with the same catalyst, lower Mws were obtained.

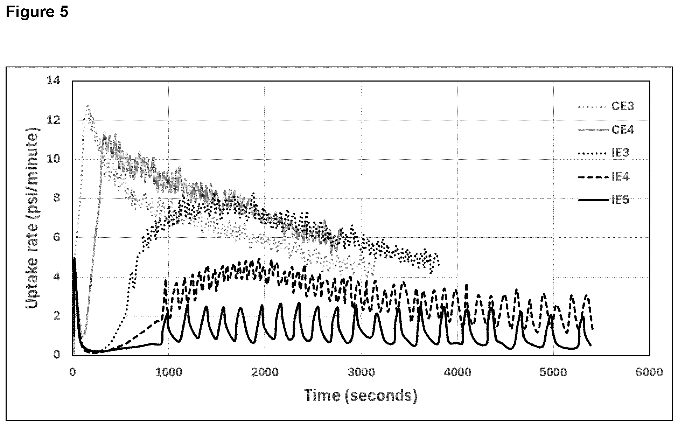

Figure 5 shows that DTHFP provides more stable kinetic profiles, a desirable feature for a multi reactor processes and/or polymerisation with long residence times.

## Claims

1. A multistage ethylene polymerisation process for producing ethylene copolymers, said process comprising:
a) polymerising ethylene in the presence of a solid Ziegler-Natta catalyst component comprising titanium, and a co-catalyst in a first polymerisation stage to produce a first polymer component;
b) polymerising ethylene in the presence of the solid Ziegler-Natta catalyst component, the cocatalyst and the first polymer component in a second polymerisation stage to produce a second polymer component;
wherein ethylene is polymerised with an alpha-olefin comonomer having from 3 to 10 carbon atoms in the first polymerisation stage and/or the second polymerisation stage; and
wherein the first polymerisation stage and/or the second polymerisation stage takes place in the presence of an external donor selected from bi-(oxygen containing ring) compounds of formula (I): 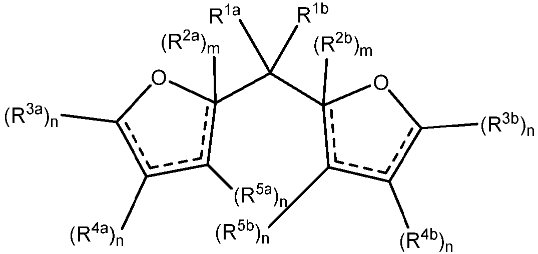
in which:
n is independently at each occurrence an integer selected from 1 and 2;
m is independently at each occurrence an integer selected from 0 and 1;
each R^{1a}, R^{1b}, R^{2a}, R^{2b}, R^{3a}, R^{3b}, R^{4a}, R^{4b}, R^{5a} and R^{5b} are the same or different and are independently selected from hydrogen, linear or branched C₁ to C₈ alkyl, C₃ to C₈ alkylene, or wherein two or more of R^{1a}, R^{1b}, R^{2a}, R^{2b}, R^{3a}, R^{3b}, R^{4a}, R^{4b}, R^{5a} and R^{5b} can form a ring;
wherein the two oxygen-containing rings can be individually saturated, partially unsaturated or unsaturated

2. The process according to claim 1 wherein the external donor is 2,2-di(2-tetrahydrofuryl)propane.

3. The process according to claim 1 or 2, wherein the first polymerisation stage takes place in the presence of the external donor and wherein the molar ratio of the external donor to titanium of the catalyst component is 1 or less; preferably 0.8 or less; more preferably 0.6 or less; even more preferably 0.5 or less; yet more preferably less than 0.47; even yet more preferably 0.46 or less; still more preferably 0.45 or less; still yet more preferably 0.44 or less; for example, from 0.01 to 0.46, from 0.02 to 0.45 or from 0.03 to 0.44.

4. The process according to any one of the preceding claims, wherein the second polymerisation stage takes place in the presence of the external donor and wherein the molar ratio of the external donor to titanium of the catalyst component is 1 or less; preferably 0.8 or less; more preferably 0.6 or less; even more preferably 0.5 or less; yet more preferably less than 0.47; even yet more preferably 0.46 or less; still more preferably 0.45 or less; still yet more preferably 0.44 or less; for example, from 0.01 to 0.46, from 0.02 to 0.45 or from 0.03 to 0.44.

5. The process according to any one of the preceding claims, wherein ethylene is polymerised with an alpha-olefin comonomer having from 3 to 10 carbon atoms to produce an ethylene copolymer with a alpha-olefin comonomer content within the range of from 0.1 to 20 weight %, based on the total weight of the ethylene copolymer.

6. The process according to any one of the preceding claims, wherein the alpha-olefin comonomer having from 3 to 10 carbon atoms is selected from 1-butene and 1-hexene.

7. The process according to any one of the preceding claims, wherein the alpha-olefin comonomer content of the first polymer component is lower than the alpha-olefin comonomer content of the second polymer component.

8. The process according to any one of the preceding claims, wherein the first polymerisation stage is a slurry phase polymerisation stage.

9. The process according to any one of the preceding claims, wherein the second polymerisation stage is a gas phase polymerisation stage.

10. The process according to any one of the preceding claims, wherein the second polymer component has a molecular weight that is greater than the molecular weight of the first polymer component.

11. The process according to any one of the preceding claims, wherein the first polymerisation stage comprises:
ai) polymerising ethylene in the presence of a solid Ziegler-Natta catalyst component to produce in a first slurry reactor an initial polymer component;
aii) transferring the initial polymer component to a second slurry reactor and polymerising ethylene in the presence of the initial polymer component and the solid Ziegler-Natta catalyst component to produce the first polymer component;
wherein:
optionally, ethylene in the first slurry reactor and/or second slurry reactor is co-polymerised with an alpha-olefin comonomer having from 3 to 10 carbon atoms; and/or optionally, ethylene in the first slurry reactor and/or second slurry reactor is polymerised in the presence of said external donor.

12. The process according to any one of the preceding claims, wherein the solid Ziegler-Natta catalyst component further comprises magnesium, optionally aluminium and optionally an internal donor supported on an inorganic oxide support.

13. An ethylene polymerisation process comprising polymerising ethylene and an alpha-olefin comonomer having from 3 to 10 carbon atoms in the presence of a solid Ziegler-Natta catalyst component comprising titanium, and a cocatalyst to produce an ethylene copolymer; wherein ethylene is polymerised in the presence of an external donor selected from bi-(oxygen containing ring) compounds of formula (I): 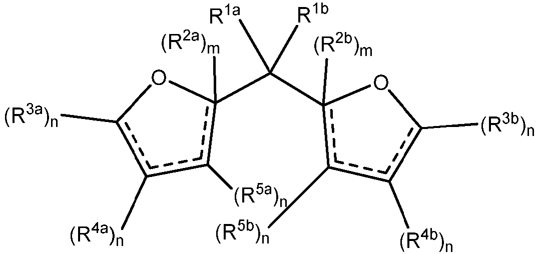 in which:
n is independently at each occurrence an integer selected from 1 and 2;
m is independently at each occurrence an integer selected from 0 and 1;
each R^{1a}, R^{1b}, R^{2a}, R^{2b}, R^{3a}, R^{3b}, R^{4a}, R^{4b}, R^{5a} and R^{5b} are the same or different and are independently selected from hydrogen, linear or branched C₁ to C₈ alkyl, C₃ to C₈ alkylene, or wherein two or more of R^{1a}, R^{1b}, R^{2a}, R^{2b}, R^{3a}, R^{3b}, R^{4a}, R^{4b}, R^{5a} and R^{5b} can form a ring;
wherein the two oxygen-containing rings can be individually saturated, partially unsaturated or unsaturated;
and wherein the molar ratio of the external donor to titanium of the catalyst component is less than 0.47; preferably 0.46 or less; more preferably 0.45 or less; yet more preferably 0.44 or less; for example, from 0.01 to 0.46, from 0.02 to 0.45 or from 0.03 to 0.44.

14. The process according to claim 13 wherein the external donor is 2,2-di(2-tetrahydrofuryl)propane.

15. The process as claimed in claim 13 or 14, wherein the ethylene copolymer has a content of alpha-olefin comonomer having from 3 to 10 carbon atoms within the range of from 0.1 to 20 weight %, based on the total weight of the ethylene copolymer.
